# EUROPÄISCHE PATENTSCHRIFT

(11) **EP 1 950 770 B1**
(45) Veröffentlichungstag und Bekanntmachung des Hinweises auf die Patenterteilung: **26.09.2012**
(21) Anmeldenummer: 07024099.9
(22) Anmeldetag: 12.12.2007
(51) Int. Cl.: H01B 17/30

(54) **Isolator**
Insulator
Isolateur

(30) Priorität: 25.01.2007 DE 102007004656
(43) Veröffentlichungstag der Anmeldung: 30.07.2008
(73) Patentinhaber: ABB Technology AG, 8050 Zürich (CH)
(72) Erfinder: Holaus, Walter, 8045 Zürich (CH); Saxl, David, 8046 Zürich (CH)
(74) Vertreter: Miller, Toivo

(56) Entgegenhaltungen:
- WO-A1-03/028043
- US-A- 4 563 545
- US-A- 4 956 525

## Beschreibung

Die Erfindung betrifft einen Isolator zur Positionierung eines elektrischen Leiters in einer gasisolierten Schaltanlage gemäß dem Oberbegriff des Anspruchs 1. Die Erfindung betrifft weiterhin eine Gehäuseeinheit für eine gasisolierte Schaltanlage gemäß dem Oberbegriff des Anspruchs 8.

Gehäuse von gasisolierten Schaltanlage weisen in der Regel kreisrunde Öffnungen zur Durchführung von elektrischen Leitern auf, wobei um eine Öffnung herum ein Anschlussflansch vorgesehen ist. Die durchzuführenden elektrischen Leiter werden dabei mittels scheibenförmiger, kreisrunder Isolatoren so positioniert, dass sie voneinander und von dem Gehäuse vorgegebene Mindestabstände einhalten.

Ein solcher Isolator wird dabei beispielsweise mittels mehrerer Schrauben auf einem Anschlussflansch befestigt. Ebenso ist es möglich, einen Befestigungsring an den Anschlussflansch zu schrauben, wobei der Isolator zwischen dem Befestigungsring und dem Anschlussflansch eingeklemmt wird.

Ein Isolator ist in US 4 563 545 offenbart.

Die Montage eines Isolator an einem Gehäuse ist daher verhältnismäßig aufwendig.

Aufgabe der Erfindung ist es, einen Isolator anzugeben, welcher einfacher an einem Gehäuse einer gasisolierten Schaltanlage zu befestigen ist.

Diese Aufgabe wird durch einen Isolator mit den im Anspruch 1 genannten Merkmalen gelöst.

Ein erfindungsgemäßer Isolator weist am äußeren Umfang seines Trägerelementes an mindestens einer Stelle mindestens einen Ausschnitt zur Aufnahme eines Klammerelements auf.

Bei der Montage wird der Isolator auf den Anschlussflansch des Gehäuses gelegt und mittels eines oder mehrerer Klammerelemente, welche in die entsprechenden Ausschnitte eingesetzt werden, auf dem Anschlussflansch befestigt. Die Klammerelemente werden dabei beispielsweise mittels Schrauben an dem Anschlussflansch montiert.

Die Befestigung des Isolator es an dem Anschlussflansch ist somit vorteilhaft vereinfacht.

Gemäß einer vorteilhaften Ausgestaltung der Erfindung weist das Trägerelement des Isolators mindestens auf einer Stirnseite im Nahbereich des äußeren Umfangs eine Nut zur Aufnahme eines Dichtungsringes auf. Mittels dieses Dichtungsringes ist die Dichtigkeit des abgedichteten Gastraums vorteilhaft erhöht.

Gemäß einer weiteren vorteilhaften Ausgestaltung der Erfindung ist in die Ausnehmung des Trägerelements ein elektrisch leitfähiges Kontaktelement zum Anschluss eines Phasenleiters eingesetzt, welches über mindestens eine Stirnseite des Trägerelements herausragt. Beim Anschluss eines Phasenleiters an das Kontaktelement existiert dann lediglich eine Kontaktstelle.

Weitere vorteilhafte Ausgestaltungen der Erfindung sind den weiteren Unteransprüchen zu entnehmen.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

Es zeigen:
- Fig. 1: einen Isolator in Seitenansicht,
- Fig. 2: eine Gehäuseeinheit mit einem Isolator und
- Fig. 3: einen Schnitt durch eine Schaltanlage mit einem Isolator.

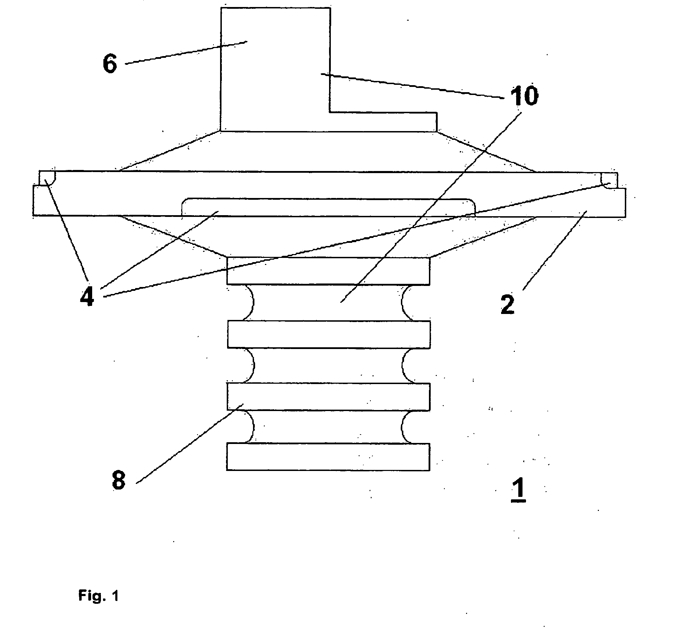

In Fig. 1 ist ein Isolator 1 für eine gasisolierte Schaltanlage in Seitenansicht dargestellt. Der Isolator 1 ist insbesondere in Mittelspannungsschaltanlagen mit einer Nennspannung im Bereich von 1 kV bis 100 kV, sowie in Hochspannungsschaltanlagen mit einer Nennspannung im Bereich von 100 kV bis 500 kV einsetzbar. Auch ein Einsatz in Schaltanlagen mit höherer oder niedrigerer Nennspannung ist denkbar. Der Isolator 1 ist in einphasig gekapselten Wechselspannungsschaltanlagen ebenso einsetzbar wie in dreiphasig gekapselten Wechselspannungsschaltanlagen oder in Gleichspannungsschaltanlagen.

Der Isolator 1 umfasst ein scheibenförmiges Trägerelement 2 mit kreisförmigem Querschnitt. Auch andere Querschnitte, beispielsweise oval oder rechteckig, sind denkbar. Auf beiden Seiten des Trägerelements 2 sind Ausschnitte 4 angeordnet, welcher zur Aufnahme von hier nicht gezeigten Klammerelementen dienen.

In der gezeigten Darstellung sind auf jeder Seite des Trägerelements 2 je zwei sich diametral gegenüberliegende Ausschnitte 4 angeordnet. Auch andere Anzahlen und Anordnungen der Ausschnitte 4 sind denkbar. Insbesondere ist es denkbar, einen umlaufenden Ausschnitt 4 vörzusehen.

In axialer Richtung weist das Trägerelement 2 eine in dieser Darstellung verdeckte Bohrung auf, in welche ein elektrisch leitfähiges Kontaktelement 10 eingesetzt ist. Das Kontaktelement 10 ragt beidseitig axial aus dem Trägerelement 2 heraus.

Auf einer Seite weist das Kontaktelement 10 einen Steckkontakt 8 zum Anschluss eines Phasenleiters auf. Auf der gegenüberliegenden Seite weist das Kontaktelement 10 einen Schraubkontakt 6 zum Anschluss eines Phasenleiters auf.

An das Kontaktelement 10 ist beidseitig des Trägerelements je einen Phasenleiter anschließbar. Die beiden Phasenleiter und das Kontaktelement 10 bilden dabei einen Leiter, welcher durch das Trägerelement 2 hindurch geführt ist. Dieser Leiter weist lediglich zwei Kontaktstellen auf.

Bei herkömmlichen Isolatoren ist das Kontaktelement in das Trägerelement eingebettet, ragt also nicht axial aus diesem heraus. Zum Anschluss eines Phasenleiters ist zunächst ein Steck- beziehungsweise Schraubkontakt an dem Kontaktelement zu befestigen und anschließend wird der Phasenleiter an dem befestigten Steck- beziehungsweise Schraubkontakt angeschlossen. In diesem Fall weist der Leiter, welcher aus zwei Phasenleitern, zwei Steck- beziehungsweise Schraubkontakten und einem Kontaktelement besteht, vier Kontaktstellen auf.

Bei dem hier gezeigten Isolator 1 ist die Anzahl der Kontaktstellen also vorteilhaft verringert.

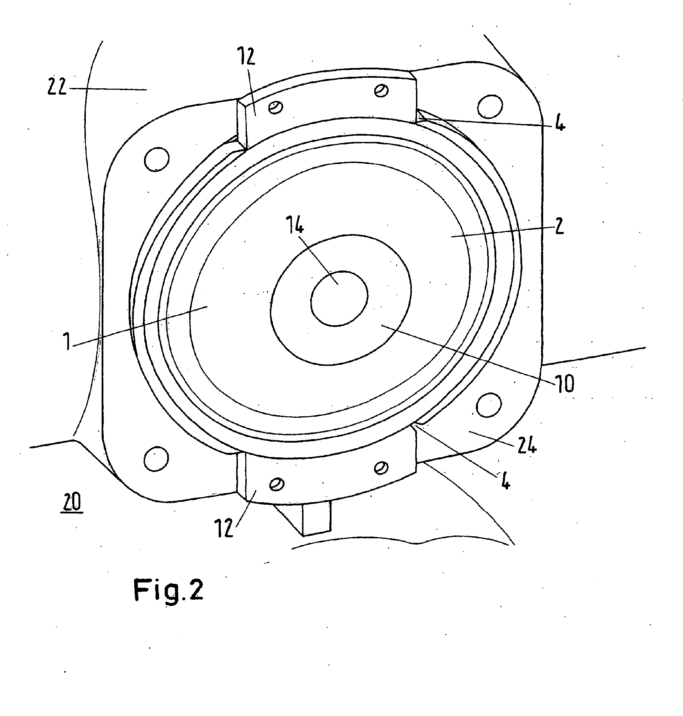

In Fig. 2 ist eine Gehäuseeinheit 20, welche ein einen Gasraum umschließendes erstes Gehäuse 22 und einen Isolator 1 umfasst, dargestellt. Das erste Gehäuse 22 verfügt über einen Anschlussflansch 24, auf welchem der Isolator 1 angeordnet ist. Das Trägerelement 2 des Isolators 1 besitzt zwei Ausschnitte 4, in welche je ein Klammerelement 12 eingesetzt ist. Die Klammerelemente 12 sind mittels hier nicht dargestellter Schrauben an dem Anschlussflansch 24 befestigt.

Das Kontaktelement 10 weist in diesem Beispiel eine Innenbohrung 14 auf, durch welche ein Gasaustausch zwischen dem Gasraum im Inneren des ersten Gehäuses 22 und einem Gasraum im Inneren eines an das erste Gehäuse 22 anschließenden zweiten Gehäuses stattfinden kann.

Der hier gezeigte Isolator 1 umfasst ein Kontaktelement 10, welches in einer Bohrung des Trägerelements 2 eingesetzt ist. Dieser Isolator 1 ist beispielsweise in einer einphasig gekapselten Schaltanlage einsetzbar. Ebenso ist dieser Isolator 1 in einer dreiphasig gekapselten Schaltanlage einsetzbar, in welcher die Leiterdurchführungen einphasig ausgebildet sind. Es ist auch denkbar, dass ein Isolator drei Kontaktelemente zur Durchführung von drei Leitern in einer dreiphasig gekapselten Schaltanlage umfasst.

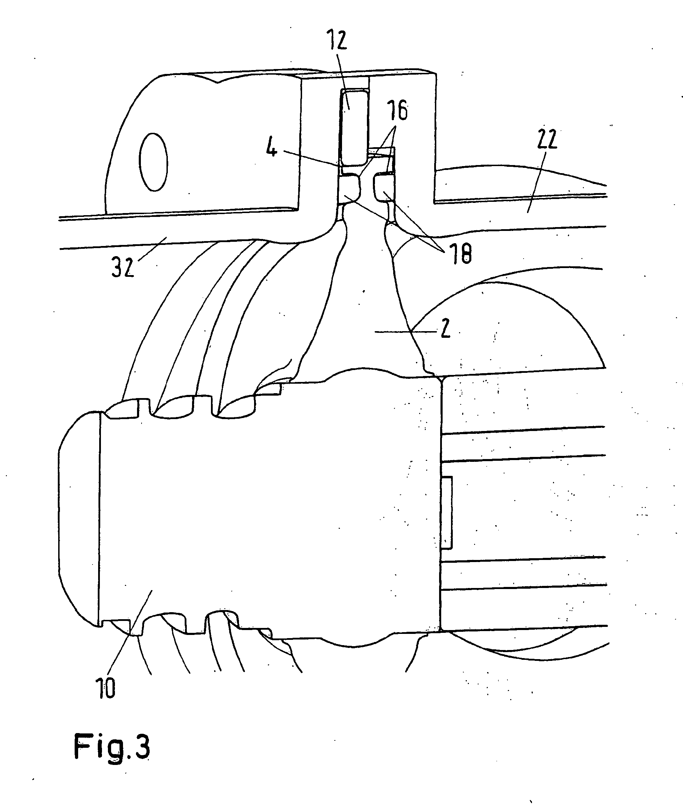

In Fig. 3 ist eine Schnittansicht einer Schaltanlage an der Verbindungsstelle zwischen einem ersten Gehäuse 22 und einem zweiten Gehäuse 32 dargestellt. Zwischen dem ersten Gehäuse 22 und im zweiten Gehäuse 32 ist ein Isolator 1 derart angeordnet, dass der Isolator 1 den Gasraum im Inneren des ersten Gehäuses 22 und dem Gasraum im Inneren des zweiten Gehäuses 32 abdichtet.

Der Isolator 1 umfasst neben dem Trägerelement 2 und dem Kontaktelement 10 zwei Dichtungsringe 18, welche sich jeweils in einer Nut 16 des Trägerelements 2 befinden. Der Isolator 1 ist mittels eines Klammerelements 12, welches in einen Ausschnitt 4 des Trägerelements 2 eingesetzt ist, an dem ersten Gehäuse 22 befestigt.

Das zweite Gehäuse 32 ist in derart mit dem ersten Gehäuse 22 befestigt, dass die in den Nuten 16 befindlichen Dichtungsringe 18 an dem ersten Gehäuse 22 und an dem zweiten Gehäuse 32 anliegen und somit die Gasräume im Inneren der Gehäuse 22, 24 gegeneinander und nach außen hin abdichten.

Bei der Montage der in Fig. 3 gezeigten Anordnung wird zunächst der Isolator 1 mittels der Klammerelemente 12 an dem ersten Gehäuse 22 befestigt. Die Klammerelemente 12 drücken dabei das Trägerelement 2 derart an das erste Gehäuse 22, dass der eine Dichtungsring 18 in dem Bereich der Klammerelemente 12 gegen das Gehäuse 22 gepresst wird. In von den Klammerelemente 12 weiter entfernten Bereichen ist die Pressung weniger stark.

Wird der Druck des Gasraums im Inneren des Gehäuses 22 verhältnismäßig stark erhöht, so gibt der Dichtungsring 18 in den Bereichen weniger starker Pressung nach und lässt den Überdruck entweichen. Ein mittels Klammerelementen 12 befestigter Isolator stellt daher sicher, dass der Druck im Inneren eines abgedichteten Gasraums einen bestimmten Wert nicht übersteigt. Ein zu hoher Druck im Innern eines Gasraums stellt während der Montage für die Monteure eine Gefahrenquelle dar, wenn beispielsweise ein Isolator zerbricht. Durch die Befestigung des Isolators mittels der Klammerelemente 12 ist diese Gefahrenquelle ausgeschaltet.

Nach Befestigung des Isolators 1 mittels der Klammerelemente 12 ist eine Evakuierung des Gasraums, das heißt eine Entnahme der enthaltenen Luft, und eine anschließende Füllung mit SF6-Gas möglich. Bei der Evakuierung des Gasraums entsteht ein Unterdruck, welcher das Trägerelement 2 und damit den Dichtungsring 18 vollständig gegen das Gehäuse 22 presst. Nach der Evakuierung kann der Gasraum mit SF6-Gas mit geringem Überdruck gefüllt werden.

Wird nun das zweite Gehäuse 32 an das erste Gehäuse 22 montiert, so drückt das zweite Gehäuse 32 auf den benachbarten Dichtungsring 18, während das erste Gehäuse 22 ebenfalls auf den benachbarten Dichtungsring 18 drückt. Auf diese Art entsteht eine vollständige Pressung der Dichtungsring 18 gegen die Gehäuse 22, 32. Nach der Montage des zweiten Gehäuses 32 an dem ersten Gehäuse 22 kann der Druck in den Gasräumen also bis zum Nenndruck erhöht werden.

Beim Anbringen eines Prüfadapters an das erste Gehäuse 22 wird der Dichtungsring 18 in ähnlicher Weise vollständig gegen das Gehäuse 22 gepresst und der Gasraum des Gehäuses 22 kann bis zum Nenndruck mit SF6-Gas gefüllt werden.

### Bezugszeichenliste

- 1: Isolator
- 2: Trägerelement
- 4: Ausschnitt
- 6: Schraubkontakt
- 8: Steckkontakt
- 10: Kontaktelement
- 12: Klammerelement
- 14: Innenbohrung
- 16: Nut
- 18: Dichtungsring
- 20: Gehäuseeinheit
- 22: erstes Gehäuse
- 24: Anschlussflansch
- 32: zweites Gehäuse

## Patentansprüche

1. Isolator (1) zur Positionierung eines elektrischen Leiters in einem Gasraum in einem Gehäuse einer gasisolierten Schaltanlage,
umfassend ein elektrisch isolierendes scheibenförmiges Trägerelement (2) mit mindestens einer Ausnehmung zur Durchführung eines elektrischen Leiters,
**dadurch gekennzeichnet, dass**
am äußeren Umfang des Trägerelements (2) an mindestens einer Stelle mindestens ein Ausschnitt (4) zur Aufnahme eines Klammerelements (12) angeordnet ist.

2. Isolator (1) nach Anspruch 1, dadurch gekenntzeichnet, dass
das Trägerelement (2) mindestens auf einer Stirnseite im Nahbereich des äußeren Umfangs eine Nut (16) zur Aufnahme eines Dichtungsringes (18) aufweist.

3. Isolator (1) nach einem der vorstehenden Ansprüche, **dadurch gekennzeichnet, dass** in die Ausnehmung ein elektrisch leitfähiges Kontaktelement (10) zum Anschluss eines Phasenleiters eingesetzt ist, welches über mindestens eine Stirnseite des Trägerelements (2) herausragt.

4. Isolator (1) nach Anspruch 3, **dadurch gekennzeichnet, dass** das Kontaktelement (10) mindestens einen Steckkontakt (8) aufweist.

5. Isolator (1) nach einem der Ansprüche 3 oder 4, **dadurch gekennzeichnet, dass** das Kontaktelement (10) mindestens einen Schraubkontakt (6) aufweist.

6. Isolator (1) nach einem der Ansprüche 3 bis 5, **dadurch gekennzeichnet, dass** das Kontaktelement (10) eine axiale Innenbohrung (14) zum Gasaustausch aufweist.

7. Isolator (1) nach einem der vorstehenden Ansprüche, **dadurch gekennzeichnet, dass** das Trägerelement (2) drei Ausnehmungen zur Durchführung je eines elektrischen Leiters aufweist.

8. Gehäuseeinheit (20) für eine gasisolierte Schaltanlage, umfassend ein Gehäuse (22), welches einen Gasraum umschließt und mindestens eine Öffnung zur Durchführung mindestens eines elektrischen Leiters aufweist,
**dadurch gekennzeichnet, dass**
ein Isolator (1) nach einem der vorstehenden Ansprüche vorgesehen ist, wobei der Isolator (1) mittels mindestens eines Klammerelements (12) an dem Gehäuse (22) befestigt ist,
wobei das Klammerelement (12) in den Ausschnitt (4) des Isolators eingesetzt und an dem Gehäuse (22) befestigt ist.

## Claims

1. Insulator (1) for positioning an electrical conductor in a gas chamber in a housing of a gas-insulated switchgear assembly, comprising an electrically insulating disc-shaped carrier element (2) with at least one cutout for passing through an electrical conductor, **characterized in that** at least one notch (4) for accommodating a clamp element (12) is arranged on the outer circumference of the carrier element (2) at at least one point.

2. Insulator (1) according to Claim 1, **characterized in that** the carrier element (2) has, at least on one front side in the vicinity of the outer circumference, a groove (16) for accommodating a sealing ring (18).

3. Insulator (1) according to one of the preceding claims, **characterized in that** an electrically conductive contact element (10) for connecting a phase conductor is inserted into the cutout, which contact element protrudes beyond at least one front side of the carrier element (2).

4. Insulator (1) according to Claim 3, **characterized in that** the contact element (10) has at least one plug-type contact (8).

5. Insulator (1) according to either of Claims 3 and 4, **characterized in that** the contact element (10) has at least one screw-type contact (6).

6. Insulator (1) according to one of Claims 3 to 5, **characterized in that** the contact element (10) has an axial inner bore (14) for gas exchange.

7. Insulator (1) according to one of the preceding claims, **characterized in that** the carrier element (2) has three cutouts for passing through in each case one electrical conductor.

8. Housing unit (20) for a gas-insulated switchgear assembly, comprising a housing (22), which surrounds a gas chamber and has at least one opening for passing through at least one electrical conductor, **characterized in that** an insulator (1) according to one of the preceding claims is provided, the insulator (1) being fastened to the housing (22) by means of at least one clamp element (12), the clamp element (12) being inserted into the notch (4) of the insulator and being fastened to the housing (22).

## Revendications

1. Isolateur (1) destiné au positionnement d'un conducteur électrique dans un espace rempli de gaz dans le boîtier d'un appareil de commutation isolé par un gaz, comprenant un élément de support (2) en forme de disque électriquement isolant comportant au moins un évidement destiné au passage d'un conducteur électrique,
**caractérisé en ce qu'**au moins une découpe (4) est ménagée en au moins un point sur la périphérie extérieure de l'élément de support (2) pour la réception d'un élément d'accrochage (12).

2. Isolateur (1) selon la revendication 1, **caractérisé en ce que** l'élément de support (2) comprend, sur au moins une face d'extrémité à proximité de la périphérie extérieure, une encoche (16) destinée à recevoir une bague d'étanchéité (18).

3. Isolateur (1) selon l'une quelconque des revendications précédentes, **caractérisé en ce qu'**un élément de contact électriquement conducteur (10) est inséré dans l'évidement pour le raccordement d'un conducteur de phase, lequel élément de contact fait saillie par rapport à au moins une face d'extrémité de l'élément de support (2).

4. Isolateur (1) selon la revendication 3, **caractérisé en ce que** l'élément de contact (10) comprend au moins un contact à fiche (8).

5. Isolateur (1) selon l'une des revendications 3 ou 4, **caractérisé en ce que** l'élément de contact (10) comprend au moins un contact vissé (6).

6. Isolateur (1) selon l'une quelconque des revendications 3 à 5, **caractérisé en ce que** l'élément de contact (10) comprend un alésage intérieur axial (14) pour l'échange de gaz.

7. Isolateur (1) selon l'une quelconque des revendications précédentes, **caractérisé en ce que** l'élément de support (2) présente trois évidements destinés au passage dans chacun d'entre eux d'un conducteur électrique.

8. Unité à boîtier (20) destinée à un dispositif de commutation isolé par un gaz, comprenant :
un boîtier (22) qui renferme un espace contenant du gaz et comprend au moins une ouverture destinée au passage d'au moins un conducteur électrique,
**caractérisé en ce qu'**il est prévu un isolateur (1) selon l'une quelconque des revendications précédentes,
dans lequel l'isolateur (1) est fixé au boîtier (22) au moyen d'au moins un élément d'accrochage (12),
dans lequel l'élément d'accrochage (12) est inséré dans la découpe (4) de l'isolateur et est fixé au boîtier (22).
